# DEMANDE DE BREVET EUROPEEN

(11) **EP 1 887 750 A1**
(43) Date de publication de la demande: **13.02.2008**
(21) Numéro de dépôt: 07110400.4
(22) Date de dépôt: 15.06.2007
(51) Int. Cl.: H04L 27/12, G06F 1/03, G06F 1/08

(54) **Dispositif de modulation par décalage de fréquence**

(30) Priorité: 10.08.2006 FR 0607253
(71) Demandeur: STMICROELECTRONICS SA, 92120 Montrouge (FR)
(72) Inventeur: Mellot, Pascal, 38250 Lans en Vercors (FR)
(74) Mandataire: Boire, Philippe Maxime Charles

(57) **Abrégé**

Un dispositif de modulation par décalage de fréquence (100) comprend un circuit oscillant (1), une boucle à verrouillage de phase (2) et un circuit numérique de modulation de fréquence (3). Le circuit oscillant est connecté à la boucle à verrouillage de phase pour produire un signal d'horloge à fréquence fixe. Ce signal d'horloge est utilisé pour cadencer le circuit de modulation de fréquence. Un cristal de modèle courant (10) peut être utilisé dans le circuit oscillant, étant donné que la fréquence RF d'un signal de transmission radio qui est produit par le dispositif de modulation est déterminée numériquement.

## Description

La présente invention concerne un dispositif de modulation par décalage de fréquence, pour réaliser une transmission RF de données binaires. Elle concerne aussi un appareil à transmission RF qui incorpore un tel dispositif.

La modulation par décalage de fréquence, FSK pour «Frequency Shift Keying» en anglais, est couramment utilisée pour transmettre des données par radio, notamment pour des transmissions à courte portée. En effet, des dispositifs de transmission qui fonctionnent selon ce principe sont simples et peu onéreux. En particulier, des souris et des claviers informatiques sans fil transmettent des données selon ce principe à une unité centrale qui est équipée d'un récepteur radio approprié. Ce récepteur peut être connecté à un port USB de l'unité centrale, par exemple. Le canal RF qui est utilisé le plus souvent pour ce type de transmission est situé dans la bande normalisée de 27 MHz (MegaHertz). Les canaux définis à l'intérieur de cette bande sont séparés de 50 kHz (kiloHertz) et sont : 26,945 MHz, 26,995 MHz, 27,045 MHz, 27,095 MHz, 27,145 MHz et 27,195 MHz.

Pour cela, la souris ou le clavier sans fil incorpore un dispositif de modulation par décalage de fréquence. Un tel dispositif convertit un signal de données binaires sérialisées («serial digital data») en un signal de transmission RF codé en fréquence. Au sein de ce signal de transmission RF, deux composantes de signal qui ont des fréquences respectives décalées différemment par rapport au canal de transmission RF utilisé correspondent aux valeurs binaires du signal de données.

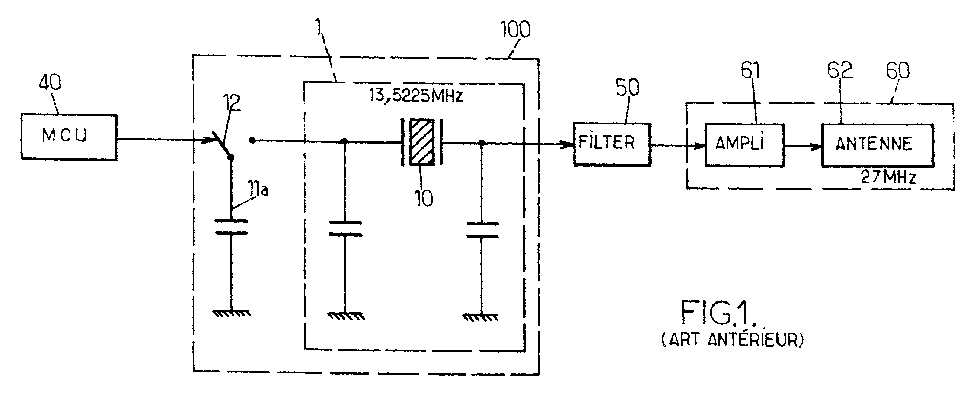

L'une des façons les plus communes de réaliser un dispositif de modulation par décalage de fréquence met en oeuvre un circuit oscillant à cristal, dont la fréquence d'oscillation peut être modifiée par adjonction d'un condensateur au circuit oscillant. Un microcontrôleur, ou MCU pour «microcontroller unit», produit le signal de données binaires qui est constitué d'une série de 0 et de 1, et ce signal est utilisé pour commander un relais de commutation du condensateur additionnel. La figure 1 illustre le principe de fonctionnement d'un appareil équipé d'un tel dispositif de transmission RF. Sur cette figure, les références 40, 100, 50 et 60 désignent respectivement le microcontrôleur qui produit les données binaires destinées à être transmises, le dispositif de modulation par décalage de fréquence qui convertit ce signal de données en un signal de transmission RF, un filtre et un émetteur RF. De façon connue, l'émetteur 60 comprend lui-même un amplificateur 61 et une antenne d'émission 62. Dans le dispositif de modulation 100, les références 10, 11a et 12 désignent le cristal, le condensateur additionnel et le relais de commutation de ce dernier. Le circuit 1, du type oscillateur de Colpit, est conçu pour produire un signal de fréquence 13,5225 MHz, et cette fréquence est légèrement abaissée lorsque le condensateur 11a est connecté par le relais 12. L'amplificateur 61 est du type redresseur, de sorte que la fréquence du signal de transmission RF est multipliée par 2 au niveau de l'antenne 62. Le canal de transmission RF utilisé dans cet exemple est alors 2 x 13,5225 = 27,045 MHz.

Mais un tel dispositif de modulation par décalage de fréquence présente les inconvénients suivants. Tout d'abord, le cristal 10 du circuit oscillant 1 doit avoir une fréquence qui est définie avec précision par rapport au canal RF utilisé. Il est alors nécessaire de changer de modèle de cristal 10 pour varier le canal RF. Pour cette raison, un dispositif de transmission à canal RF variable doit incorporer plusieurs cristaux de circuit oscillant qui sont connectés alternativement en fonction du canal sélectionné. Un tel dispositif à canal variable est particulièrement complexe et onéreux. En outre, les cristaux nécessaires ne sont pas de modèles couramment disponibles commercialement, de sorte qu'ils sont chacun onéreux par eux-mêmes. Enfin, les caractéristiques des cristaux utilisés et celles du condensateur additionnel sont susceptibles de varier au sein de mêmes séries de production de ces composants. Il en résulte des déviations de l'écart de fréquence qui est utilisé pour le codage du signal RF transmis. La compatibilité du dispositif avec un récepteur RF donné peut alors être affectée.

D'autres dispositifs de modulation par décalage de fréquence incorporent des circuits de boucles à verrouillage de phase (PLL pour «Phase Locking Loop») fractionnaires, ou encore des convertisseurs numériques-analogiques (DAC pour «Digital-Analog Converter») à haute fréquence, afin d'utiliser des cristaux de circuit oscillant qui n'ont pas une fréquence spécifique imposée par le canal RF utilisé, et qui sont couramment disponibles dans le commerce. Mais de tels circuits PLL fractionnaires et de tels DACs sont eux-mêmes onéreux, notamment à cause des nombreux composants analogiques qu'ils incorporent. De plus, ils possèdent des consommations élevées de puissance électrique.

Un but de la présente invention consiste donc à proposer un dispositif de modulation par décalage de fréquence qui ne présente pas les inconvénients cités ci-dessus.

Pour cela, l'invention propose un dispositif de modulation qui comprend :
- un circuit oscillant à cristal, qui est adapté pour produire en sortie un signal périodique de référence ;
- un circuit de boucle à verrouillage de phase, qui est connecté en entrée à la sortie du circuit oscillant, et qui est adapté pour produire en sortie un signal d'horloge à fréquence fixe à partir du signal périodique de référence ; et
- un circuit numérique de modulation de fréquence, qui est connecté pour recevoir en entrée un signal de données binaires destinées à être transmises, et qui est adapté pour produire en sortie un signal de transmission RF codé en fréquence.

En outre, le circuit numérique de modulation de fréquence comprend lui-même un modulateur numérique sigma-delta à 1 bit et à filtrage passe-bande, qui est adapté pour produire en sortie le signal de transmission RF à partir d'une série de nombres reçue en entrée par ce modulateur sigma-delta.

Deux valeurs binaires du signal de données sont converties par le circuit numérique en deux composantes du signal de transmission RF qui ont des fréquences respectives décalées différemment par rapport à un canal de transmission RF. En outre, le circuit numérique de modulation de fréquence a une entrée de signal d'horloge qui est connectée à la sortie du circuit de boucle à verrouillage de phase.

Un dispositif de modulation par décalage de fréquence selon l'invention présente les avantages suivants :
- le dispositif ne comprend qu'un unique cristal de circuit oscillant ;
- ce cristal peut être d'un modèle qui est couramment disponible commercialement, et qui peut donc être produit en grande série à coût réduit ;
- en dehors du circuit de boucle à verrouillage de phase, tous les autres éléments du circuit sont des éléments numériques. De cette façon, le signal de transmission RF peut être synthétisé avec précision sans nécessiter de composants analogiques onéreux ;
- le dispositif de modulation ne comporte que des éléments et des circuits simples, qui sont faciles à mettre en oeuvre au sein d'un circuit électronique intégré. En particulier, le circuit de boucle à verrouillage de phase qui est utilisé peut posséder un rapport entier, et non fractionnaire, entre des fréquences de signaux d'entrée et de sortie de ce circuit ;
- grâce à la nature numérique du circuit de modulation de fréquence, les deux fréquences du canal de transmission RF qui correspondent respectivement aux valeurs binaires 0 et 1 des données destinées à être transmises, sont définies numériquement. Elles sont donc définies avec une grande précision, et ne présentent aucune variation incontrôlée ; et
- ces deux fréquences correspondant respectivement aux valeurs 0 et 1 des données peuvent être programmées, lors de la fabrication du dispositif de modulation ou lors de son utilisation ultérieure. De cette façon, un même dispositif de modulation, qui est muni d'un cristal unique, peut être utilisé pour des transmissions effectuées dans des canaux RF différents, par simple changement de sa programmation.

Dans la pratique, la valeur de fréquence du canal utilisé est programmée, ainsi qu'une valeur de déviation par rapport à celle-ci, qui est mise en oeuvre différemment pour transmettre chacune des valeurs binaires 0 et 1. Eventuellement, la programmation de la valeur de fréquence du canal peut aussi être utilisée pour changer de bande de transmission RF.

En particulier, un dispositif de modulation par décalage de fréquence selon l'invention peut être adapté pour une transmission RF à l'intérieur d'un canal de la bande à 27 MHz. Il peut être alors incorporé à de nombreux appareils à transmission radio qui utilisent cette bande RF.

Selon un perfectionnement de l'invention, le circuit de boucle à verrouillage de phase peut être programmable. Des cristaux de circuit oscillant fonctionnant à des fréquences différentes peuvent alors être incorporés dans des dispositifs selon l'invention qui sont identiques par ailleurs, en adaptant la programmation de chaque circuit de boucle à verrouillage de phase pour tenir compte de la fréquence de chaque cristal utilisé. De cette façon, les dispositifs produisent des signaux d'horloge qui ont la même fréquence fixe alors que les cristaux de circuits oscillants diffèrent. La conception d'un dispositif de modulation selon l'invention est donc compatible avec l'utilisation de cristaux différents.

L'invention propose aussi un appareil à transmission RF qui comprend :
- un microcontrôleur, qui est adapté pour produire les données binaires ;
- un dispositif de modulation par décalage de fréquence tel que décrit précédemment, qui est connecté en entrée pour recevoir les données binaires produites par le microcontrôleur ; et
- un émetteur RF, qui est connecté pour recevoir en entrée un signal de transmission RF codé en fréquence produit par le dispositif de modulation par décalage de fréquence, et qui est adapté pour transmettre ce signal par radio.

Un tel appareil peut être, en particulier, une souris informatique, un clavier informatique, une unité de commande à distance, une unité de capteur, ou une partie d'un jouet à transmission radio.

L'invention propose encore un procédé de synthèse d'un signal de transmission RF codé en fréquence, pour transmettre par radio des données binaires, qui comprend les étapes suivantes :
- générer un signal d'horloge à fréquence fixe en utilisant un circuit de boucle à verrouillage de phase ;
- programmer une valeur de fréquence d'un canal de transmission RF et une valeur de déviation par rapport à cette fréquence de canal, ces valeurs étant transmises à un circuit numérique de modulation de fréquence, celui-ci comprenant lui-même un modulateur numérique sigma-delta à 1 bit et à filtrage passe-bande, qui est adapté pour produire en sortie le signal de transmission RF à partir d'une série de nombres reçue en entrée par ce modulateur sigma-delta ;
- transmettre le signal d'horloge à fréquence fixe au circuit numérique de modulation de fréquence, de façon à cadencer un fonctionnement de ce dernier par le signal d'horloge à fréquence fixe, et simultanément
- transmettre un signal des données binaires au circuit numérique de modulation de fréquence, de façon à produire le signal de transmission RF, deux valeurs binaires du signal de données étant converties en deux composantes du signal de transmission RF ayant des fréquences respectives qui sont décalées différemment par rapport au canal de transmission RF, et qui sont déterminées à partir des valeurs programmées de fréquence de canal et de déviation.

La fréquence de canal de transmission RF peut notamment être sélectionnée dans la bande à 27 MHz.

Le procédé peut comprendre en outre l'étape suivante :
- programmer, en fonction d'un cristal d'un circuit oscillant connecté en entrée du circuit de boucle à verrouillage de phase, des facteurs de division de fréquence du circuit de boucle à verrouillage de phase.

De cette façon, la fréquence fixe du signal d'horloge qui est généré au moyen du circuit de boucle à verrouillage de phase peut être 108 MHz, alors que le cristal du circuit oscillant peut être d'un modèle variable.

Enfin, le signal de transmission RF peut être produit au sein du circuit numérique de modulation de fréquence en exécutant les sous-étapes suivantes :
- générer, sur un nombre fixe de bits, une première série de nombres à progression arithmétique, laquelle progression arithmétique a un pas qui est déterminé en fonction d'une donnée binaire destinée à être transmise ;
- convertir la première série de nombres en une seconde série de nombres variant selon une fonction sinusoïdale, cette fonction sinusoïdale ayant une fréquence qui est fixée par la première série de nombres ; et
- transmettre la seconde série de nombres au modulateur numérique sigma-delta à 1 bit et à filtrage passe-bande, pour produire en sortie le signal de transmission RF.

La génération de la première série de nombres et le fonctionnement du modulateur sigma-delta sont alors cadencés par le signal d'horloge à fréquence fixe. En outre, la première série de nombres peut être convertie en la seconde série de nombres en utilisant une table enregistrée de conversion de variations linéaires en variations sinusoïdales.

Un tel procédé de synthèse de signal de transmission RF peut être utilisé notamment pour transmettre des données binaires qui sont produites par une souris informatique, un clavier informatique, une unité de commande à distance, une unité de capteur, ou une partie d'un jouet à transmission radio.

D'autres particularités et avantages de la présente invention apparaîtront dans la description ci-après d'un exemple de réalisation non limitatif, en référence aux dessins annexés, dans lesquels :
- la figure 1 est un diagramme fonctionnel d'un appareil à transmission RF incorporant un dispositif de modulation à décalage de fréquence selon l'art antérieur ;
- la figure 2 est un diagramme fonctionnel d'un dispositif de modulation à décalage de fréquence selon l'invention ;
- la figure 3 est un diagramme fonctionnel illustrant un circuit de boucle à verrouillage de phase pouvant être utilisé dans un dispositif selon l'invention ;
- la figure 4 est un diagramme fonctionnel illustrant un circuit numérique de modulation de fréquence pouvant être utilisé dans un dispositif selon l'invention ;
- la figure 5 est un diagramme fonctionnel d'un modulateur numérique sigma-delta à 1 bit et à filtrage passe-bande pouvant être utilisé dans un circuit numérique de modulation de fréquence conforme à la figure 4 ; et
- la figure 6 est un diagramme fonctionnel d'un appareil à transmission RF incorporant un dispositif de modulation à décalage de fréquence selon l'invention.

La figure 1 a déjà été décrite plus haut et n'est pas reprise.

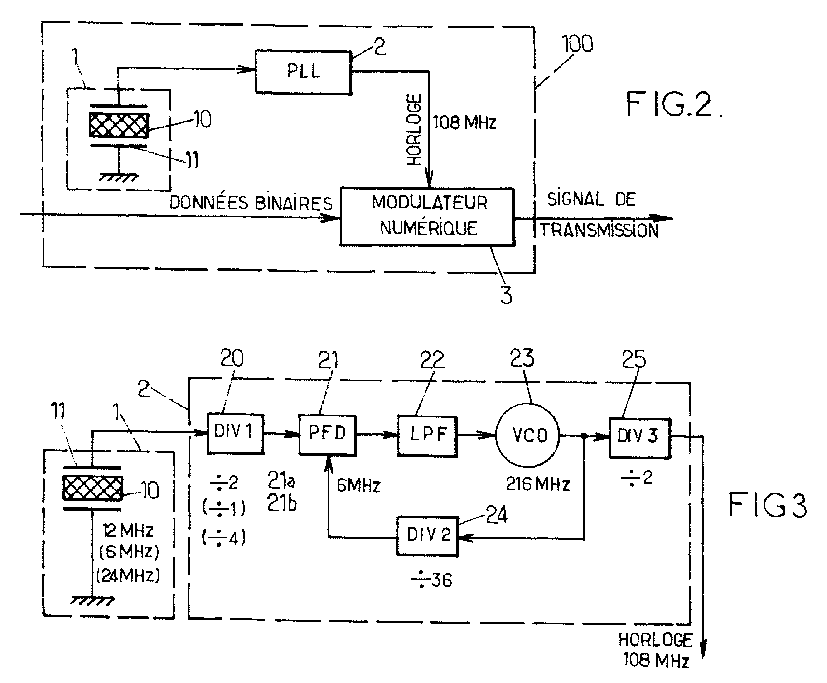

Conformément à la figure 2, un dispositif 100 de modulation à décalage de fréquence selon l'invention comprend une branche de génération d'un signal d'horloge à fréquence fixe et une branche de traitement d'un signal de données qui sont destinées à être transmises par voie radio.

La branche de traitement du signal des données qui sont destinées à être transmises comprend un circuit numérique de modulation de fréquence 3, noté modulateur numérique sur la figure. Les données binaires sont transmises sous forme sérialisée en entrée du modulateur numérique 3, à une fréquence qui est fixée par un microcontrôleur qui produit ces données. Cette fréquence de données peut être, par exemple, 13,5 MHz. Le modulateur numérique 3 produit en sortie, à partir des données binaires, un signal de transmission RF dans lequel les données binaires sont codées.

La branche de génération du signal d'horloge à fréquence fixe comprend un circuit oscillant 1 et un circuit de boucle à verrouillage de phase 2. Le circuit oscillant 1 incorpore, d'une façon connue en soi, un cristal 10 qui est associé à au moins un condensateur 11. Il fournit un signal périodique de référence qui est transmis au circuit de boucle à verrouillage de phase 2. Ce dernier transpose le signal périodique de référence à une fréquence plus élevée. Par exemple, le circuit de boucle à verrouillage de phase 2 peut être adapté pour produire un signal d'horloge à la fréquence fixe de 108 MHz.

Ce signal d'horloge à fréquence fixe est utilisé pour cadencer le modulateur numérique 3.

La figure 3 illustre une réalisation possible du circuit de boucle à verrouillage de phase 2, selon laquelle ce circuit est programmable. Un tel circuit 2 comprend lui-même :
- un premier diviseur de fréquence 20, noté DIV 1, qui est connecté en entrée à la sortie du circuit oscillant 1 ;
- un comparateur de phase 21, noté PFD pour «Phase-Frequency Detector», qui est adapté pour produire en sortie un signal de comparaison en fonction d'une différence de phase entre deux signaux reçus respectivement sur une première entrée 21a et sur une seconde entrée 21 b de ce comparateur de phase, la première entrée 21 a étant connectée à une sortie du diviseur de fréquence 20 ;
- un filtre passe-bas 22, noté LPF pour «Low-Pass Filter », qui est connecté en entrée à la sortie du comparateur de phase 21, et qui produit en sortie une tension de commande à partir du signal de comparaison ;
- un oscillateur contrôlé en tension 23, noté VCO pour «Voltage-Controlled Oscillator», qui est connecté en entrée pour recevoir la tension de commande produite par le filtre 22, et qui est adapté pour produire en sortie un signal ayant une fréquence fixée par la tension de commande ;
- un second diviseur de fréquence 24, noté DIV 2, qui est connecté en entrée à la sortie de l'oscillateur contrôlé en tension 23, et connecté en sortie à l'entrée 21 b du comparateur de phase 21 ; et
- un troisième diviseur de fréquence 25, noté DIV 3, qui est connecté en entrée à la sortie de l'oscillateur contrôlé en tension 23, et qui est adapté pour produire en sortie le signal d'horloge à fréquence fixe.

Le diviseur de fréquence 24 constitue la branche de rétroaction du circuit de boucle à verrouillage de phase 2. Elle permet d'asservir, au moyen du comparateur de phase 21, la fréquence du signal produit par l'oscillateur 23.

L'un au moins des trois diviseurs de fréquence 20, 24 et 25 peut posséder un facteur de division ajustable. De cette façon, il est possible de varier les fréquences du cristal 10 et du signal d'horloge produit par le diviseur de fréquence 25 sans modifier le dispositif entier.

Par exemple, l'oscillateur contrôlé en tension 23 peut être d'un modèle fonctionnant approximativement à 216 MHz et le diviseur de fréquence 24 peut posséder un facteur de division égal à 36. Dans ce cas, le comparateur de phase 21 fonctionne avec des signaux reçus en entrée qui ont des fréquences sensiblement égales à 6 MHz. Lorsque le cristal 10 est d'un modèle à 12 MHz, le facteur de division du diviseur 20 doit être ajusté à environ 2, alors qu'il doit être ajusté à 1 ou 4 pour des cristaux 10 respectivement à 6 MHz et 24 MHz.

Pour produire le signal d'horloge à la fréquence de 108 MHz, le diviseur de fréquence 25 peut posséder un facteur de division égal à 2.

Le filtre passe-bas 22 possède une fréquence de coupure de quelques dizaines de kiloHertz, de sorte que le signal de commande transmis à l'oscillateur 23 est quasi-continu et varie lentement.

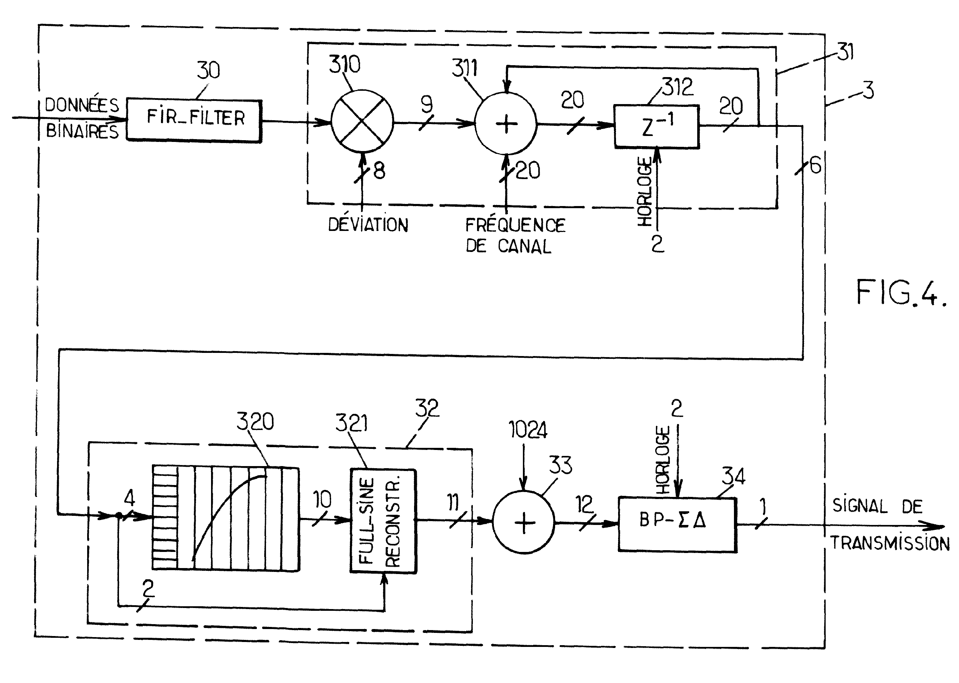

La figure 4 illustre une réalisation possible du circuit numérique de modulation de fréquence 3, dans laquelle la fréquence de canal et la déviation de fréquence qui est utilisée pour le codage sont programmables. Sur cette figure, les nombres qui sont inscrits sur les lignes de transmission de données numériques indiquent les dimensions des bus qui sont utilisés dans le mode de réalisation de l'invention qui est décrit ici. Il est entendu que ces dimensions ne sont données qu'à titre d'exemple et peuvent être modifiées dans des modes de réalisation alternatifs. Un tel circuit 3 comprend lui-même :
- un générateur numérique 31, qui est adapté pour produire en sortie, sur un nombre fixe de bits, une première série de nombres à progression arithmétique. Cette progression arithmétique a un pas déterminé en fonction d'une donnée binaire qui est destinée à être transmise, et qui est reçue en entrée par le circuit 3 ;
- un convertisseur numérique 32, qui est connecté en entrée à la sortie du générateur numérique 31, et qui est adapté pour convertir la première série de nombres en une seconde série de nombres variant selon une fonction sinusoïdale, laquelle a une fréquence qui est fixée par la première série de nombres ; et
- un modulateur numérique sigma-delta à 1 bit et à filtrage passe-bande 34, qui est relié en entrée pour recevoir la seconde série de nombres et qui produit en sortie le signal de transmission RF.

Optionnellement, le circuit numérique de modulation de fréquence 3 peut comprendre en outre un filtre 30, qui est connecté en amont du générateur numérique 31. Le filtre 30 est adapté pour réduire des discontinuités du signal des données binaires qui sont destinées à être transmises. De cette façon, le signal de transmission RF qui est produit par le circuit 3 présente moins de bruit provoqué par les discontinuités du signal de données. En particulier, le filtre 30 peut être du type FIR, pour «Finite Impulse Response» en anglais.

Le générateur numérique 31 comprend un multiplicateur 310, un sommateur 311 et un retardateur d'une unité de temps d'horloge, noté Z⁻¹ et référencé 312.

Le filtre 30 et le multiplicateur 310 sont de préférence cadencés à la fréquence du signal d'entrée des données binaires, c'est-à-dire 13,5 MHz.

Le multiplicateur 310 combine chaque valeur de donnée binaire 0 ou 1 avec une valeur de déviation de fréquence programmée. Il calcule ainsi le décalage de fréquence par rapport au canal RF utilisé, qui correspond à chaque valeur binaire.

Le sommateur 311 additionne le décalage de fréquence calculé par le multiplicateur 310 à la fréquence du canal RF. Celle-ci est programmée et introduite dans le sommateur 311 par une entrée dédiée. Par exemple, lorsque la valeur de la fréquence du canal RF est codée sur 20 bits, la valeur de fréquence 27,045 MHz et celle de la déviation de fréquence sont programmées sous les formes respectives de 27,045 x 2²⁰/108 et (déviation en MHz) x 2²⁰/108. Les bits de codage du décalage de fréquence sont ajoutés aux bits de poids les plus faibles du codage de la fréquence du canal RF, pour obtenir la fréquence RF qui correspond à la valeur binaire qui est en cours de traitement.

En outre, le sommateur 311 réalise un cumul des valeurs de fréquence de canal et de décalage de cette fréquence sur des temps d'horloge successifs, qui sont cadencés par le signal d'horloge produit par le circuit de boucle à verrouillage de phase 2. Pour cela, la sortie du sommateur 311 est bouclée sur une entrée supplémentaire de celui-ci, via le retardateur 312. Ce dernier reçoit le signal d'horloge produit par le circuit 2 sur une entrée d'horloge dédiée. De cette façon, le générateur numérique 31 produit une première série de nombres sous forme d'une série à progression arithmétique, dont le pas est égal à la fréquence de codage de la valeur binaire en cours de traitement. Par ailleurs, chaque nombre de la première série est calculé modulo 2²⁰, étant donné que son codage est limité sur 20 bits. Autrement dit, un nombre de cette série est automatiquement diminué de 2²⁰, dès qu'il dépasse cette valeur.

Ces nombres de la première série sont alors utilisés pour générer numériquement un signal sinusoïdal ayant comme fréquence la valeur programmée du canal RF, ajoutée au décalage de fréquence qui correspond à chaque bit de donnée. Le convertisseur 32 peut comprendre une table enregistrée 320, qui est adaptée pour convertir des variations linéaires en variations sinusoïdales. Une telle table 320 comprend des valeurs de la fonction sinus stockées à des adresses repérées successivement. Ces valeurs de fonction sinus peuvent être codées sur 10 bits, afin d'obtenir une précision suffisante, notamment pour les faibles valeurs. Les bits de poids les plus forts des nombres de la première série produite par le générateur 31 sont alors utilisés comme adressage de lecture dans la table 320. Les valeurs lues, qui forment la seconde série de nombres, appartiennent à une fonction sinusoïdale qui possède la fréquence du canal RF décalée selon la valeur du bit de donnée.

Dans la pratique, la table de conversion 320 peut être limitée à un quart de période de variation sinusoïdale, en utilisant un module 321 de reconstruction de la variation sinusoïdale sur une période entière. Pour cela, les quatre bits de poids les plus faibles peuvent être utilisés pour désigner les adresses de lecture dans la table 320, et les deux bits suivants sont utilisés pour rétablir la variation sinusoïdale sur une période entière.

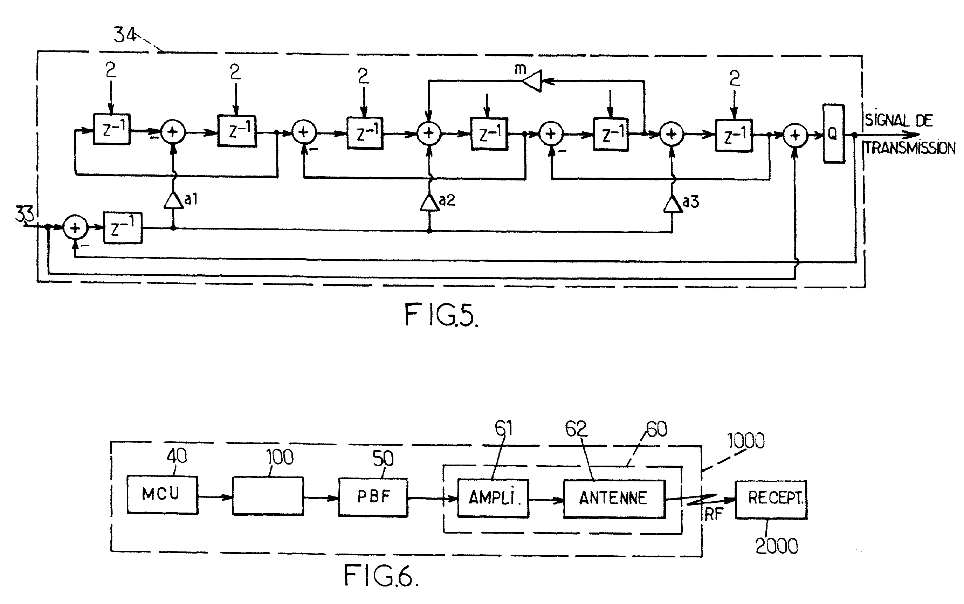

Enfin, les nombres de la seconde série sont transmis au modulateur numérique sigma-delta à 1 bit de sortie et à filtrage passe-bande 34. Celui-ci peut être du sixième ordre tel que représenté sur la figure 5. Les valeurs des coefficients d'amplification m, a1, a2 et a3 sont respectivement 1/1024, -1/16, ½ et -1. Sur cette figure, chaque composant est symbolisé de la façon usuelle, connue de l'Homme du métier. Les retardateurs d'une unité de temps d'horloge, noté Z⁻¹, reçoivent chacun sur une entrée de cadencement le signal d'horloge produit par le circuit de boucle à verrouillage de phase 2. Ainsi, le modulateur sigma-delta 34 est cadencé à 108 MHz. Un opérateur de quantification à deux niveaux, par exemple 0 V et 1,8 V (volt), noté Q et disposé en sortie du modulateur 34, produit le signal de transmission RF.

En fonction du modulateur sigma-delta qui est utilisé, une valeur constante de 1024 peut être ajoutée aux nombres de la seconde série, en utilisant un sommateur 33 disposé entre le convertisseur 32 et le modulateur sigma-delta 34. De cette façon, les nombres de la seconde série peuvent être ramenés à des valeurs positives.

Dans ces conditions, le signal de transmission RF qui est produit par le modulateur sigma-delta 34 est constitué d'une suite pseudoaléatoire d'impulsions rectangulaires de 1,8 V (volt) de hauteur. A cause de la largeur variable des impulsions, ce signal possède une composante spectrale à la fréquence du canal RF programmée, celle-ci étant décalée en fonction de la valeur binaire 0 ou 1 de la donnée en cours de transmission.

Conformément à la figure 6, un dispositif de modulation selon l'invention peut être incorporé dans un appareil à transmission radio 1000. Un tel appareil comprend, dans l'ordre correspondant au sens de transmission des signaux, un microcontrôleur 40 qui produit les données destinées à être transmises, un dispositif de modulation par décalage de fréquence 100 conforme à la figure 2, un filtre passe-bande 50 noté PBF pour «passband filter», et un émetteur RF 60. Ce dernier comprend lui-même un amplificateur 61 qui alimente une antenne 62. Le filtre 50 et l'émetteur 60 peuvent être réalisés d'une façon usuelle, de sorte qu'ils ne sont pas décrits en détail. Il est précisé toutefois que le filtre 50, qui est connecté entre le dispositif de modulation 100 et l'émetteur 60, n'est pas indispensable pour l'obtention d'une transmission radio satisfaisante. En effet, un récepteur radio 2000 qui est utilisé pour détecter le rayonnement RF produit par l'antenne 62 incorpore lui-même, le plus souvent, un filtre. Néanmoins, l'utilisation d'un filtre 50 dans l'appareil 1000 permet de réduire le bruit de rayonnement produit par la transmission radio en dehors de la bande de 27 MHz.

Il est entendu que la description détaillée de l'invention qui a été décrite plus haut n'est donnée qu'à titre d'illustration. De nombreuses modifications peuvent être introduites par rapport à celle-ci, tout en conservant certains au moins des avantages de l'invention. En particulier, les réalisations de circuits de boucle de verrouillage de phase et de modulation de fréquence peuvent être modifiées, par rapport à celles qui sont illustrées par les figures 3 à 5.

## Revendications

1. Dispositif de modulation par décalage de fréquence comprenant :
- un circuit oscillant à cristal (1), adapté pour produire en sortie un signal périodique de référence ;
- un circuit de boucle à verrouillage de phase (2), connecté en entrée à la sortie du circuit oscillant et adapté pour produire en sortie un signal d'horloge à fréquence fixe à partir du signal périodique de référence ; et
- un circuit numérique de modulation de fréquence (3), connecté pour recevoir en entrée un signal de données binaires destinées à être transmises, et adapté pour produire en sortie un signal de transmission RF codé en fréquence, deux valeurs binaires du signal de données étant converties par ledit circuit numérique en deux composantes du signal de transmission RF ayant des fréquences respectives décalées différemment par rapport à un canal de transmission RF,
le circuit numérique de modulation de fréquence (3) ayant une entrée de signal d'horloge connectée à la sortie du circuit de boucle à verrouillage de phase (2),
le dispositif étant **caractérisé en ce que** le circuit numérique de modulation de fréquence (3) comprend lui-même un modulateur numérique sigma-delta à 1 bit et à filtrage passe-bande (34), adapté pour produire en sortie le signal de transmission RF à partir d'une série de nombres reçue en entrée par ledit modulateur sigma-delta.

2. Dispositif selon la revendication 1, dans lequel le circuit de boucle à verrouillage de phase (2) est adapté pour produire un signal d'horloge à 108 MHz.

3. Dispositif selon la revendication 1 ou 2, adapté pour une transmission RF à l'intérieur d'un canal de la bande à 27 MHz.

4. Dispositif selon l'une quelconque des revendications précédentes, dans lequel le circuit de boucle à verrouillage de phase (2) est programmable, de façon à produire le signal d'horloge avec la même fréquence fixe pour des cristaux (10) différents du circuit oscillant (1).

5. Dispositif selon l'une quelconque des revendications précédentes, dans lequel le circuit de boucle à verrouillage de phase (2) comprend lui-même :
- un premier diviseur de fréquence (20), connecté en entrée à la sortie du circuit oscillant (1) ;
- un comparateur de phase (21), adapté pour produire en sortie un signal de comparaison en fonction d'une différence de phase entre deux signaux reçus respectivement sur des première (21 a) et seconde (21b) entrées dudit comparateur de phase, la première entrée du comparateur de phase étant connectée à une sortie du premier diviseur de fréquence (20) ;
- un filtre passe-bas (22), connecté en entrée à la sortie du comparateur de phase (21) et produisant en sortie une tension de commande à partir du signal de comparaison ;
- un oscillateur contrôlé en tension (23), connecté en entrée pour recevoir la tension de commande produite par le filtre passe-bas (22), et adapté pour produire en sortie un signal ayant une fréquence fixée par ladite tension de commande ;
- un second diviseur de fréquence (24), connecté en entrée à la sortie de l'oscillateur contrôlé en tension (23), et connecté en sortie à la seconde entrée du comparateur de phase (21b) ; et
- un troisième diviseur de fréquence (25), connecté en entrée à la sortie de l'oscillateur contrôlé en tension (23), et adapté pour produire en sortie le signal d'horloge à fréquence fixe.

6. Dispositif selon la revendication 5, dans lequel l'un au moins des premier (20), deuxième (24) et troisième (25) diviseurs de fréquence a un facteur de division ajustable.

7. Dispositif selon la revendication 5 ou 6, dans lequel l'oscillateur contrôlé en tension (23) est adapté pour produire un signal ayant une fréquence approximativement égale à 216 MHz, et dans lequel les deuxième (24) et troisième (25) diviseurs de fréquence possèdent des facteurs de division respectivement égaux à 36 et 2.

8. Dispositif selon l'une quelconque des revendications précédentes, dans lequel le circuit numérique de modulation de fréquence (3) comprend lui-même, en plus du modulateur numérique sigma-delta à 1 bit et à filtrage passe-bande (34) :
- un générateur numérique (31), adapté pour produire en sortie, sur un nombre fixe de bits, une première série de nombres à progression arithmétique, ladite progression arithmétique ayant un pas déterminé en fonction d'une donnée binaire destinée à être transmise et reçue en entrée par le circuit numérique de modulation de fréquence ; et
- un convertisseur numérique (32), connecté en entrée à la sortie du générateur numérique (31) et adapté pour convertir la première série de nombres en une seconde série de nombres variant selon une fonction sinusoïdale, ladite fonction sinusoïdale ayant une fréquence fixée par ladite première série de nombres,
ledit modulateur numérique sigma-delta à 1 bit et à filtrage passe-bande (34) étant relié en entrée pour recevoir ladite seconde série de nombres et destiné à produire en sortie le signal de transmission RF, et
le générateur numérique (31) et le modulateur sigma-delta (34) ayant des entrées respectives de signal d'horloge connectées à la sortie du circuit de boucle à verrouillage de phase (2).

9. Dispositif selon la revendication 8, dans lequel le convertisseur numérique (32) comprend une table enregistrée (320) adaptée pour convertir des variations linéaires en variations sinusoïdales.

10. Dispositif selon la revendication 8 ou 9, dans lequel le circuit numérique de modulation de fréquence (3) comprend en outre un filtre (30) connecté en amont du générateur numérique (31), et adapté pour réduire des discontinuités du signal des données binaires destinées à être transmises.

11. Appareil à transmission RF (1000) comprenant :
- un microcontrôleur (40), adapté pour produire des données binaires ;
- un dispositif de modulation par décalage de fréquence (100) selon l'une quelconque des revendications 1 à 9, connecté en entrée pour recevoir les données binaires produites par le microcontrôleur ; et
- un émetteur RF (60), connecté pour recevoir en entrée un signal de transmission RF codé en fréquence produit par le dispositif de modulation par décalage de fréquence (100), et adapté pour transmettre par radio ledit signal de transmission RF.

12. Appareil selon la revendication 11, comprenant en outre un filtre passe-bande (50) connecté entre le dispositif de modulation par décalage de fréquence (100) et l'émetteur RF (60).

13. Appareil selon la revendication 11 ou 12, sélectionné dans une liste comprenant une souris informatique, un clavier informatique, une unité de commande à distance, une unité de capteur, et une partie d'un jouet à transmission radio.

14. Procédé de synthèse d'un signal de transmission RF codé en fréquence, pour transmettre par radio des données binaires, ledit procédé comprenant les étapes suivantes :
- générer un signal d'horloge à fréquence fixe en utilisant un circuit de boucle à verrouillage de phase (2) ;
- programmer une valeur de fréquence d'un canal de transmission RF et une valeur de déviation par rapport à ladite fréquence de canal, lesdites valeurs programmées étant transmises à un circuit numérique de modulation de fréquence (3) , ledit circuit numérique de modulation de fréquence (3) comprenant lui-même un modulateur numérique sigma-delta à 1 bit et à filtrage passe-bande (34), adapté pour produire en sortie le signal de transmission RF à partir d'une série de nombres reçue en entrée par ledit modulateur sigma-delta ;
- transmettre le signal d'horloge à fréquence fixe au circuit numérique de modulation de fréquence (3), de façon à cadencer un fonctionnement dudit circuit numérique de modulation de fréquence par ledit signal d'horloge à fréquence fixe, et simultanément
- transmettre un signal des données binaires au circuit numérique de modulation de fréquence (3), de façon à produire le signal de transmission RF, deux valeurs binaires du signal de données étant converties en deux composantes du signal de transmission RF ayant des fréquences respectives décalées différemment par rapport au canal de transmission RF, et déterminées à partir des valeurs programmées de fréquence de canal et de déviation.

15. Procédé selon la revendication 14, suivant lequel la fréquence de canal de transmission RF est sélectionnée dans la bande à 27 MHz.

16. Procédé selon la revendication 14 ou 15, comprenant en outre l'étape suivante :
- programmer, en fonction d'un cristal (10) d'un circuit oscillant (1) connecté en entrée du circuit de boucle à verrouillage de phase (2), des facteurs de division de fréquence dudit circuit de boucle à verrouillage de phase.

17. Procédé selon la revendication 16, suivant lequel les facteurs de division de fréquence du circuit de boucle à verrouillage de phase (2) sont programmés de sorte que la fréquence fixe du signal d'horloge généré au moyen dudit circuit de boucle à verrouillage de phase est 108 MHz.

18. Procédé selon l'une quelconque des revendications 14 à 17, suivant lequel le signal de transmission RF est produit au sein du circuit numérique de modulation de fréquence (3) en exécutant les sous-étapes suivantes :
- générer, sur un nombre fixe de bits, une première série de nombres à progression arithmétique, ladite progression arithmétique ayant un pas déterminé en fonction d'une donnée binaire destinée à être transmise ;
- convertir la première série de nombres en une seconde série de nombres variant selon une fonction sinusoïdale, ladite fonction sinusoïdale ayant une fréquence fixée par ladite première série de nombres ; et
- transmettre ladite seconde série de nombres au modulateur numérique sigma-delta à 1 bit et à filtrage passe-bande (34), pour produire en sortie le signal de transmission RF,
la génération de la première série de nombres et le fonctionnement du modulateur sigma-delta (34) étant cadencés par le signal d'horloge à fréquence fixe.

19. Procédé selon la revendication 18, suivant lequel la première série de nombres est convertie en la seconde série de nombres en utilisant une table enregistrée (320) de conversion de variations linéaires en variations sinusoïdales.

20. Utilisation d'un procédé selon l'une quelconque des revendications 14 à 19, pour transmettre des données binaires produites par un appareil (1000) sélectionné dans une liste comprenant une souris informatique, un clavier informatique, une unité de commande à distance, une unité de capteur, et une partie d'un jouet à transmission radio.
